# EUROPÄISCHE PATENTSCHRIFT

(11) **EP 1 896 247 B1**
(45) Veröffentlichungstag und Bekanntmachung des Hinweises auf die Patenterteilung: **28.04.2010**
(21) Anmeldenummer: 06741669.3
(22) Anmeldetag: 27.06.2006
(51) Int. Cl.: B29C 67/00

(54) **VERFAHREN UND VORRICHTUNG ZUR HERSTELLUNG EINES DREIDIMENSIONALEN GEGENSTANDS DURCH EIN GENERATIVES 3D-VERFAHREN**
METHOD AND DEVICE FOR PRODUCING A 3D OBJECT BY MEANS OF A GENERATIVE 3D-METHOD
PROCEDE ET DISPOSITIF DE FABRICATION D'UN ARTICLE TRIDIMENSIONNEL PAR L'INTERMEDIAIRE D'UN PROCEDE 3D GENERATIF

(30) Priorität: 27.06.2005 DE 102005030067
(43) Veröffentlichungstag der Anmeldung: 12.03.2008
(73) Patentinhaber: Inspire AG für mechatronische Produktionssysteme und Fertigungstechnik, 9014 St. Gallen (CH)
(72) Erfinder: SCHLEISS, Peter, CH-9016 St.Gallen (CH); LEVY, Gideon, CH-6644 Orselina (CH)
(74) Vertreter: Mötteli-Mantelli, Novella
(86) Internationale Anmeldenummer: PCT/CH2006/000344
(87) Internationale Veröffentlichungsnummer: WO 2007/000069

(56) Entgegenhaltungen:
- US-A1- 2005 116 391
- REN C. LUO ET AL: "The Development of a Direct Metallic Rapid Prototyping System" April 2004 (2004-04), PROCEEDINGS OF THE 2004 IEEE INTERNATIONAL CONFERENCE ON ROBOTICS & AUTOMATION , NEW ORLEANS , XP002398605 Seite 33, Spalte 2, Absatz II

## Beschreibung

Die Erfindung bezieht sich auf ein Verfahren und eine Vorrichtung zur Herstellung eines dreidimensionalen Gegenstands durch ein thermisches generatives 3D-Verfahren, wie z.B. selektives Laser-Sintern (selective laser sintering, SLS), selektives Laser-Schmelzen (selective laser melting, SLM).

### Stand der Technik

Bei einem generativen Verfahren erfolgt eine schichtweise Herstellung eines dreidimensionalen Gegenstands, wobei im allgemeinen die folgenden Schritte durchgeführt werden:
➢ schichtweises, insbesondere selektives, Auftragen von Material auf eine Zieloberfläche in einer Prozesskammer;
➢ Zuführen von Energie in die Schicht aus Material, um das Material innerhalb der Schicht und mit einer darunter liegenden Materialschicht des zu bildenden dreidimensionalen Gegenstands zu verschmelzen;
➢ Wiederholen der Schritte des Auftragens von Material und des Zuführens von Energie, um den Gegenstand schichtweise aufzubauen;
➢ wobei mittels mindestens eines elektromagnetischen Elements elektromagnetische Strahlung in die Prozesskammer eingestrahlt wird und/oder die Temperatur der Zieloberfläche und ggf. anderer Oberflächen im Innern der Prozesskammer durch Erfassen der von ihnen abgestrahlten Strahlung bestimmt wird.

Ein Beispiel eines generativen Verfahrens ist selektives Laser-Sintern (SLS-Verfahren), das im wesentlichen die folgenden Schritte aufweist:
➢ Aufbringen einer Schicht aus Pulver auf eine Zieloberfläche;
➢ Zuführen von Energie an ausgewählten Stellen der Schicht, die einem Querschnitt des zu bildenden Gegenstands in der Schicht entsprechen, um das Pulver an den ausgewählten Stellen zu schmelzen;
➢ Wiederholen der Schritte des Aufbringens von Pulver und des Zuführens von Energie, um den Gegenstand schichtweise aufzubauen.
➢ Anschliessend wird das nicht geschmolzene Pulver vom Gegenstand entfernt.

Zum selektiven Verschmelzen des Pulvers auf der Zieloberfläche innerhalb der jeweiligen Schicht und mit der darunterliegenden schon verfestigten Schicht verwendet man einen auf einen möglichst kleinen Punkt in der Schichtebene fokussierten Laserstrahl, der eine Abtastbewegung innerhalb der jeweiligen Schicht durchführt und somit einen jeweiligen Querschnitt des zu bildenden Gegenstandes erzeugt. Der Laserstrahl "schreibt" bzw. "zeichnet" die jeweiligen massiven Bereiche der Querschnittsfläche, indem er hinter sich eine "Spur" geschmolzenen bzw. verschmolzenen Pulvers hinterlässt.

Derartige SLS-Verfahren haben sich in den letzten Jahren zunehmend für die Herstellung von Prototypen für Versuchszwecke, für Fertigteile, die nur in kleiner Anzahl benötigt werden, oder für individualisierte Teile, wie Knochen-Implantate und dgl etabliert. In diesem Zusammenhang redet man auch von der raschen Herstellung von Prototypen (Rapid Prototyping, RP-Verfahren). Je nach den mechanischen Anforderungen an den herzustellenden dreidimensionalen Gegenstand werden reine Polymerpulver (z.B. PA, PBT, etc.) oder Pulvergemische verwendet, die z.B. Polymerpulver vermischt mit Glasspulver, Keramikpulver, Metallpulver oder anderen Füllmaterialien enthalten, deren Schmelzpunkt in der Regel höher liegt als der Schmelzpunkt des Polymermaterials. Gegebenenfalls werden auch reine Metallpulver oder Metallpulvergemische direkt verarbeitet.

Um in dem schichtweise aufgebauten Gegenstand Materialspannungen und Verformungen (Schrumpfen, Verziehen) sowie ein Sintern ausserhalb des fokussierten Laserstrahls zu vermeiden, ist es notwendig, die Temperatur der Zieloberfläche und des Prozessraumes ("Bauraum", in dem der Gegenstand aufgebaut wird) zu überwachen und ggf. zu steuern.

Zur Erfassung der Oberflächentemperatur der Zieloberfläche verwendet man z.B. Infrarot-Sensoren.

Für die Beeinflussung der Oberflächentemperatur der Zieloberfläche verwendet man im wesentlichen zwei Massnahmen. Einerseits führt man der Zieloberfläche grossflächig Strahlungsenergie z.B. über Infrarot-Strahler und punktuell über den fokussierten Laserstrahl zu. Andererseits lässt man ein temperaturgesteuertes (temperiertes) Gas wie z.B. Stickstoff oder Argon über die Zieloberfläche strömen, um neben der durch Abstrahlung abgegebenen Wärme von der Zieloberfläche einen weiteren Teil der Abwärme durch Wärmeleitung und Abtransport in dem Gas zu entfernen.

In der Praxis treten beim Betrieb solcher SLS-Anlagen jedoch mehrere Probleme im Zusammenhang mit den in den Prozessraum ragenden IR-Sensoren auf.

Bei solchen SLS-Verfahren werden in der Regel Pulvermaterialien verwendet, bei denen zumindest ein Teil des Pulvers ein Polymermaterial ist. Dies hat zur Folge, dass aufgrund der Aufheizung des Polymermaterials während des Bauprozesses Dämpfe (Monomere und Oligomere) in den Prozessraum gelangen, die sich auf einer IR-Linse (Gradientenlinse) oder einem IR-Fenster der temperierten IR-Sensoren niederschlagen und zu Messabweichungen führen, da die IR-Sensoren und deren Linsen bzw. Fenster deutlich kälter als der die Dämpfe enthaltende Prozessraum sind. Die Linsen oder Fenster müssen deshalb regelmässig mit Ethanol oder einem anderen starken Lösungsmittel gereinigt werden. Dadurch werden aber die Dichtungen zwischen der Linse oder dem Fenster und dem Sensor-Hauptkörper beschädigt und verlieren mit der Zeit ihre Dichtwirkung.

Um derartige Niederschläge zu vermeiden, werden die IR-Sensoren auf möglichst hohe Temperaturen vorgeheizt. Dabei ist man einerseits bestrebt, die Temperatur der IR-Sensoren und ihrer Linsen bzw. Fenster auf einen möglichst hohen Wert einzustellen, um derartige Niederschläge so gering wie möglich zu halten. Andererseits ist man aber auch bestrebt, die Temperatur der IR-Sensoren auf einem möglichst niedrigen Wert zu halten, um eine optimale Funktion und lange Lebensdauer zu gewährleisten. Dies führt in der Regel dazu, dass man während eines längeren Bauprozesses (z.B. 20h bis 70h) entweder eine immer schlechter werdende Funktion des IR-Sensors durch Niederschläge in Kauf nehmen muss, oder dass man zwar während des Bauprozesses wenig Niederschlag auf dem Sensor erfährt, dafür aber verstärkt damit rechnen muss, dass der IR-Sensor aufgrund zu hoher Temperatur über eine zu lange Zeit hinweg vorzeitig funktionsuntüchtig wird. Besonders ärgerlich ist dies, wenn der IR-Sensor inmitten eines sehr langen Bauprozesses ausfällt.

Das Vorheizen der IR-Sensoren erfolgt meist elektrisch oder induktiv. Dies führt zu Magnetfeldern, die den IR-Sensor umgeben. Dadurch wird die zur Verarbeitung des Sensorsignals verwendete Elektronik gestört.

An einem Beispiel soll dies noch einmal verdeutlicht werden:

Bei der Verarbeitung von PA12 (einer speziellen Sorte von Polyamid) für einen schichtweise aufgebauten Gegenstand arbeitet man mit einer Temperatur in der SLS-Prozesskammer von etwa 180°C. Die in die Prozesskammer ragenden marktüblichen IR-Sensoren haben eine maximal zulässige Kopftemperatur von 85°C. Um einen Niederschlag auf der Linse bzw. dem Fenster des IR-Sensors weitgehend zu verhindern, muss der IR-Sensor auf etwa 80°C vorgeheizt werden (Kopftemperatur). Für die Herstellung eines schichtweise aufgebauten Gegenstands mit vertikalen Abmessungen von etwa 300mm - 400mm benötigt man mit marktüblichen SLS-Anlagen eine Bauzeit von etwa 20h - 70h. Ein derartiger Bauprozess stellt jedes Mal ein Risiko dar, weil der IR-Sensor über derart lange Bauzeiten meist überhitzt und dann während des Bauprozesses defekt wird, so dass mitunter ein Grossteil des Bauprozesses "blind" und somit ohne richtige Steuerung/Regelung der Prozesstemperatur erfolgt, was zu den weiter oben genannten Qualitätseinbussen führt (Materialspannungen und Verformungen im aufgebauten Gegenstand). Dies hat zur Folge, dass man sehr rasch einige Tausend Euro an Pulver und Anlagenstunden verliert.

Wie man sieht, können bei den bekannten SLS-Anlagen oder anderen Anlagen für die Durchführung generativer 3D-Verfahren die zur Überwachung und Steuerung/Regelung notwendigen IR-Sensoren sowie andere optische Elemente, insbesondere Laser, durch verschiedene Einflüsse in ihrer Funktionsweise und Lebensdauer beeinträchtigt werden.

Die Einstrahlung der Wärmeenergie erfolgt durch ein sogenanntes Laserfenster, welches die Abgrenzung zwischen Energiequelle und Arbeitsraum darstellt. Ähnliche Probleme wie beim Sensor ergeben sich auch hier.

Ähnliche Probleme wie beim selektiven Laser-Sintern (selective laser sintering, SLS) treten auch beim selektiven Laser-Schmelzen (selective laser melting, SLM).

Der Erfindung liegt die Aufgabe zugrunde, eine Anlage zur Durchführung eines generativen 3D-Verfahrens (z.B. SLS-Anlage, SLM-Anlage) mit einem darin verwendeten IR-Sensor und ggf. Laser oder Elektronenstrahl (EBM), für das eingangs beschriebene generative Verfahren (SLS-Verfahren, SLM-Verfahren) derart zu verbessern, dass die geschilderten Nachteile des Stands der Technik weitgehend beseitigt werden können.

US 2005/116 391 offenbart die Oberbegriffe der Ansprüche 1 und 19.

Diese Aufgabe wird vorrichtungsmässig durch Anspruch 1 und verfahrensmässig durch Anspruch 19 gelöst.

Die erfindungsgemässe Vorrichtung zur schichtweisen Herstellung eines dreidimensionalen Gegenstands durch ein generatives Verfahren umfasst eine Prozesskammer, in welcher der dreidimensionale Gegenstand nach und nach gebildet wird; ein Mittel zum, insbesondere selektiven, schichtweisen Auftragen von Material auf eine Zieloberfläche in der Prozesskammer und Miteinander-Verschmelzen der Materialschichten des zu bildenden dreidimensionalen Gegenstands; und mindestens ein elektromagnetisches Element zum Aussenden elektromagnetischer Strahlung in die Prozesskammer und/oder Empfangen elektromagnetischer Strahlung aus der Prozesskammer.

Erfindungsgemäss enthält die Vorrichtung ein Mittel zur Erzeugung eines Schleiers aus einem temperierten Fluid zwischen dem elektromagnetischen Element und dem Prozesskammer-Volumen.

Durch den Fluid-Schleier wird eine Barriere zwischen dem Prozesskammer-Volumen und dem elektromagnetischen Element aufgebaut, die verhindert, dass bei dem generativen Verfahren in das Prozesskammer-Volumen freigesetztes Material in Form von Feststoffpartikeln, Oligomeren oder Monomeren zu dem elektromagnetischen Element gelangt und sich auf diesem niederschlägt und dessen Funktion beeinträchtigt.

Das elektromagnetische Element ist vorzugsweise ein optisches Element, das elektromagnetische Strahlung zur Energiezufuhr in die Prozesskammer aussendet oder elektromagnetische Strahlung aus der Prozesskammer empfängt.

Bei dem elektromagnetischen Element handelt es sich insbesondere um einen optischen Sensor, insbesondere um einen Infrarot-Sensor. Derartige optische Sensoren werden bei vielen generativen Verfahren verwendet, um die Temperatur in der Prozesskammer und an der "Baustellenoberfläche" in dem Bauraum zu erfassen.

Das elektromagnetische Element kann auch ein Laser sein. Ein Laser wird z.B. beim SLS-Verfahren und beim SLM-Verfahren verwendet, um die jeweils aufgetragenen Pulverschichten selektiv aufzuschmelzen und mit der darunterliegenden Produktebene zu verschmelzen.

Vorzugsweise ist ein Mittel zur Erzeugung eines Fluid-Schleiers an dem elektromagnetischen Element angeordnet. Das unmittelbar am elektromagnetischen Element angeordnete Mittel erzeugt einen, vorzugsweise temperierten, Fluid-Schleier am elektromagnetischen Element, wodurch Niederschläge an diesem zumindest erschwert werden.

Ein Mittel zur Erzeugung eines Fluid-Schleiers kann auch beabstandet von dem elektromagnetischen Element angeordnet sein. Dadurch wird während des generativen Verfahrens freigesetztes Material aus einem das elektromagnetische Element umgebenden Bereich ferngehalten.

Bei einer speziellen Ausführung ist ein erstes Mittel zur Erzeugung eines ersten, vorzugsweise temperierten, Fluid-Schleiers an dem elektromagnetischen Element angeordnet und ein zweites Mittel zur Erzeugung eines zweiten, nicht notwendigerweise temperierten, Fluid-Schleiers beabstandet von dem elektromagnetischen Element angeordnet. Dadurch entsteht eine doppelte Barriere, die freigesetztes Material von dem elektromagnetischen Element fernhält.

Zweckmässigerweise besitzt das elektromagnetische Element ein Gehäuse sowie ein Fenster und/oder eine Linse in dem Gehäuse, das bzw. die in die Prozesskammer gerichtet ist, wobei das Gehäuse des elektromagnetischen Elements vorzugsweise einen Kanal aufweist, der von dem temperierten Fluid durchströmbar ist. Dadurch lässt sich eine besonders wirkungsvolle Temperierung der Oberfläche des Fensters und/oder der Linse erreichen, so dass eine Niederschlagsbildung von Monomeren und Oligomeren, Dämpfe durch Temperierung und Spülung der Oberfläche verhindert wird, während eine Niederschlagsbildung durch Feststoffpartikel zumindest durch die Spülwirkung verhindert wird.

Zweckmässigerweise besitzt der Kanal eine Mündung im Bereich des Fensters bzw. der Linse des elektromagnetischen Elements. Dadurch bewegt sich das Fluid mit relativ hoher Geschwindigkeit relativ zu dem Fenster bzw. der Linse.

Besonders vorteilhaft ist es, wenn der Kanal im Mündungsbereich schräg zu dem Fenster bzw. der Linse ausgerichtet ist, damit das temperierte Fluid mit einer zur Fensterfläche bzw. Linsenoberfläche parallelen Strömungskomponente in die Prozesskammer austreten kann. Dadurch wird sowohl eine intensive Temperierung als auch Spülung der Oberfläche des Fensters und/oder der Linse und eine wirkungsvolle Verhinderung von Niederschlägen erreicht.

Der Kanal kann ein das gesamte elektromagnetische Element umgebender Kanal sein, der sich zwischen einem das elektromagnetische Element unmittelbar umgebenden inneren Gehäusebereich und einem den Kanal umgebenden äusseren Gehäusebereich erstreckt. Auch diese Massnahme trägt zur Intensivierung der Temperierung des elektromagnetischen Elements bei. Insbesondere kann der Kanal senkrecht zur Strömungsrichtung einen kreisringförmigen oder von einem inneren und äusseren Polygon begrenzten Querschnitt aufweisen.

Die erfindungsgemässe Vorrichtung kann eine Fluidquelle aufweisen, von der eine Fluidleitung zu dem elektromagnetischen Element führt. Ausserdem kann sie eine Fluidsenke aufweisen, über die das Fluid aus der Prozesskammer abgezogen wird. Insbesondere bei der Verwendung relativ kostspieliger Inertgase, wie z.B. Argon, ist es vorteilhaft, wenn die Fluidsenke mit der Fluidquelle in Fluidverbindung steht, so dass ein Fluidkreislauf gebildet wird, wobei das Fluid dann zwischen der Fluidsenke und der Fluidquelle aufbereitet wird.

Bei einer speziellen Ausführung kann die Temperierung des elektromagnetischen Elements allein durch das umströmende Fluid erfolgen. Dadurch erübrigen sich z.B. weitere elektrische Heiz- oder Kühlelemente.

Vorzugsweise besitzt das elektromagnetische Element eine am Rand seines Fensters und/oder seiner Linse angebrachte thermische Isolierschicht, oder der Rand seines Fensters und/oder seiner Linse besteht aus einem thermisch isolierenden Material. Dadurch wird gewährleistet; dass die Oberfläche der Isolierschicht am Rand des Fensters oder der Linse im wesentlichen dieselbe Temperatur wie das Prozessraum-Volumen hat, in dem sich freigesetztes Material befindet, so dass ein Niederschlag am Fenster oder Linsenrand und ein "Zuwachsen" des Fensters oder der Linse weitgehend verhindert wird.

Bei dem erfindungsgemässen generativen Verfahren zur schichtweisen Herstellung eines dreidimensionalen Gegenstands erfolgt ein, insbesondere selektives, schichtweises Auftragen einer Schicht aus Material auf eine Zieloberfläche in einer Prozesskammer und ein Zuführen von Energie in die Schicht aus Material, um das Material innerhalb der Schicht und mit einer darunter liegenden Materialschicht des zu bildenden dreidimensionalen Gegenstands zu verschmelzen. Diese Schritte des Auftragens von Material und des Zuführens von Energie werden wiederholt durchgeführt, um den Gegenstand schichtweise aufzubauen. Mittels mindestens eines elektromagnetischen Elements wird dabei elektromagnetische Strahlung in die Prozesskammer eingestrahlt, und/oder die Temperatur der Zieloberfläche und ggf. anderer Oberflächen im Innern der Prozesskammer wird durch Erfassen der von ihnen abgestrahlten Strahlung bestimmt.

Erfindungsgemäss wird ein Schleier aus einem temperierten Fluid zwischen dem elektromagnetischen Element und dem Prozesskammer-Volumen erzeugt.

Vorzugsweise wird ein Schleier aus temperiertem Fluid an dem elektromagnetischen Element erzeugt. Dieser Schleier dient zur Spülung und Temperierung der Oberfläche des elektromagnetischen Elements, während ein Schleier aus nicht notwendigerweise temperiertem Fluid beabstandet von dem elektromagnetischen Element erzeugt wird. Dieser Schleier hat vorwiegend eine Spülfunktion bzw. Barrierefunktion.

Bei einer speziellen Ausführung wird ein erster Fluid-Schleier an dem elektromagnetischen Element erzeugt und ein zweiter Fluid-Schleier beabstandet von dem elektromagnetischen Element erzeugt, um eine doppelte Barriere gegen freigesetztes Material von dem elektromagnetischen Element zu bilden.

Als temperiertes Fluid kann ein insbesondere Stickstoff und/oder Argon aufweisendes Schutzgas verwendet werden, um ungewollte Oxidationen zu verhindern.

Das temperierte Fluid kann das elektromagnetische Element umströmen und eine Flüssigkeit aufweisen, wobei insbesondere die Flüssigkeit des temperierten Fluids nach dem Umströmen des elektromagnetischen Elements verdampft wird und als Dampf in die Prozesskammer gelangt. Dadurch kann das elektromagnetische Element gekühlt werden. Als das elektromagnetische Element umströmendes temperiertes Fluid wird vorzugsweise ein Schutzgas verwendet, in dem Flüssigkeitströpfchen mitgeführt werden, die während des Umströmens des elektromagnetischen Elements zumindest teilweise verdampfen.

Zweckmässigerweise beträgt das Volumen der Prozesskammer 0,2 m³ bis 3 m³, und die Durchflussmenge bzw. der Durchsatz des temperierten Fluids, welches das elektromagnetische Element umströmt, liegt zwischen 20 cm³/min und 400 cm³/min, vorzugsweise zwischen 50 cm³/min und 200 cm³/min, wobei der Druck im Bereich von 0,3x10⁵ Pa bis 3x10⁵ Pa, vorzugsweise von 0,6x10⁵ Pa bis 1,2x10⁵ Pa, liegt.

Weitere Vorteile, Merkmale und Anwendungsmöglichkeiten der Erfindung ergeben sich aus der nun folgenden Beschreibung eines nicht einschränkend aufzufassenden Ausführungsbeispiels anhand der Zeichnung, wobei:
- Fig. 1: eine schematische Perspektivansicht einer Vorrichtung für selektives Laser- sintern (SLS-Maschine) ist, innerhalb der Gegenstände schichtweise gene- riert werden können;
- Fig. 2: eine Schnittansicht durch die Vorrichtung von Fig. 1 ist;
- Fig. 3: eine schematische Darstellung der Schutzgas-Leitung ist;
- Fig. 4A: eine Draufsicht auf eine auseinandergebaute Anordnung aus einem Heiz- element und einer Schutzgas-Durchführung zeigt;
- Fig. 4B: eine Schnittansicht durch die Anordnung von Fig. 4A entlang der Schnittebe- ne B-B ist;
- Fig. 5A: eine Draufsicht auf eine teilweise auseinandergebaute Anordnung aus einem elektromagnetischen Element, einem Kühlelement und einem Mittel zum Er- zeugen eines Schutzgas-Schleiers zeigt; und
- Fig. 5B: eine Schnittansicht durch die Anordnung von Fig. 3A entlang der Schnittebe- ne A-A ist.
- Fig. 6: eine Draufsicht auf einen elektromagnetischen IR-Sensor.

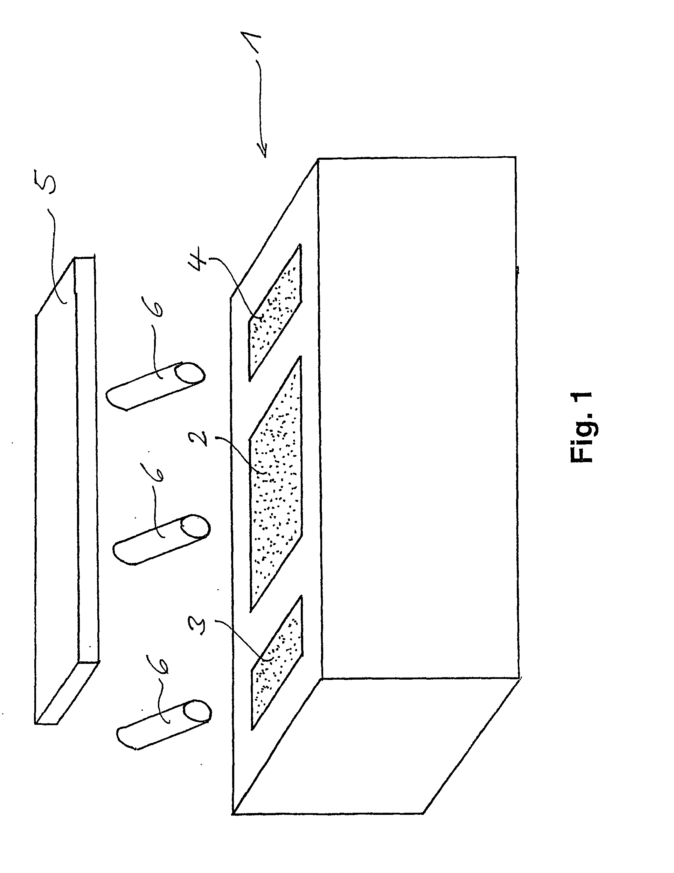

Fig. 1 zeigt eine Vorrichtung zur Herstellung eines dreidimensionalen Gegenstands durch selektives Lasersintern (SLS-Verfahren). Diese sog. SLS-Anlage bzw. SLS-Sintermaschine enthält eine Prozesskammer 1, in welcher der schichtweise Aufbau ("Bauvorgang") eines dreidimensionalen Gegenstands erfolgt.

Die Anlage enthält ausserdem (nicht gezeigte) Mittel zum Aufbringen einer Schicht aus Pulver auf eine Zieloberfläche 2 in der Prozesskammer 1. Dieses Pulver stammt aus Pulverbehältem 3, 4, die sich beiderseits von der Zieloberfläche befinden. Bei den Mitteln zum Aufbringen von Pulver auf die Zieloberfläche 2 handelt es sich z.B. um Walzen, die Pulver von den Pulverbehältem 3, 4 zu der Zieloberfläche 2 verschieben können, so dass eine dünne Pulverschicht auf der Zieloberfläche 2 abgelagert wird.

Die Anlage enthält auch Mittel zum Zuführen von Energie an ausgewählten Stellen der Pulverschicht, die einem Querschnitt des zu bildenden Gegenstands in der Schicht entsprechen, um das Pulver an den ausgewählten Stellen zu schmelzen.

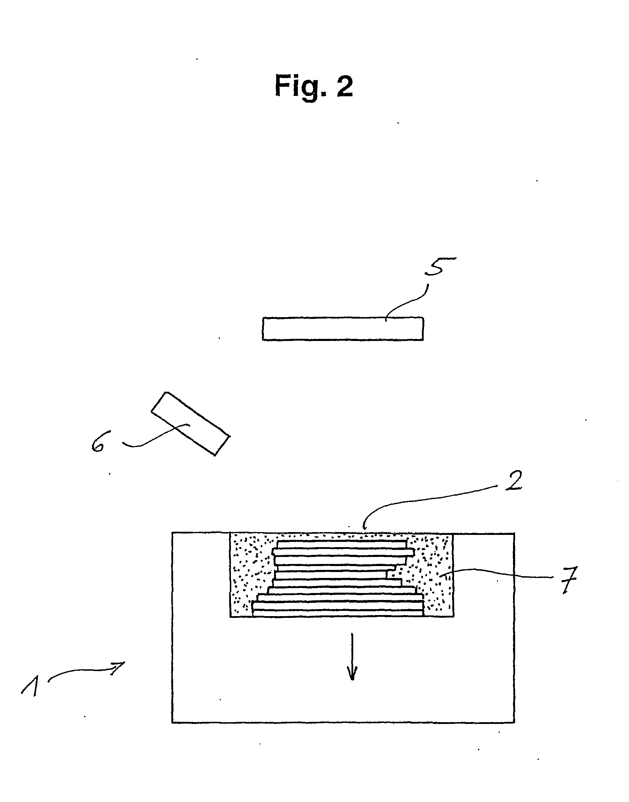

Für die Beeinflussung der Oberflächentemperatur der Zieloberfläche verwendet man im folgende Massnahmen:
1) Man führt der Zieloberfläche 2 grossflächig Strahlungsenergie z.B. über einen Infrarot-Strahler 5 zu (siehe Fig. 2);
2) Man führt der Zieloberfläche 2 punktuell über einen fokussierten Laserstrahl Energie zu, um eine punktuelle Aufschmelzung des Pulvers zu erzielen;
3) Man lässt ein temperaturgesteuertes (temperiertes) Gas wie z.B. Stickstoff oder Argon über die Zieloberfläche 2 strömen, um neben der durch Abstrahlung abgegebenen Wärme von der Zieloberfläche 2 einen weiteren Teil der Abwärme durch Wärmeleitung und Abtransport in dem Gas zu entfernen.

Mittels eines Strahlungssensors, z.B. in Form eines IR-Sensors 6, wird die von der Zieloberfläche und ggf. anderen Oberflächen (3, 4) im Innern der Prozesskammer abgestrahlte Strahlung erfasst, um die jeweilige Oberflächentemperatur zu bestimmen.

Die Information über diese Oberflächentemperaturen dient als Grundlage für eine Ansteuerung der Aufheizung (Massnahme 1) oder Abkühlung (Massnahme 3) zur Beeinflussung der Oberflächentemperatur der Zieloberfläche 2.

Der Boden der Pulverbehälter 3, 4 wird während des Bauvorgangs in kleinen Schritten nach oben bewegt, so dass am Boden der Prozesskammer 1 stets Pulver bereitgestellt wird, das z.B. durch die Walzen oder ähnliche Mittel zu der Zieloberfläche 2 bewegt werden kann. Der schichtweise gebildete Gegenstand, dessen obere, ebene Fläche die Zieloberfläche 2 bildet, wird während des Bauvorgangs in kleinen Schritten nach unten bewegt, so dass der gebildete Gegenstand nach und nach in einem Baubehälter 7 versenkt wird (siehe Fig. 2), wobei die Zieloberfläche 2 mit dem Boden der Prozesskammer 1 bündig ist.

Um zu verhindern, dass der Strahlungssensor bzw. der Infrarot-Sensor 6 während eines Bauvorgangs durch Niederschläge aus Monomeren, Oligomeren oder Feststoffpartikeln in seiner Funktion beeinträchtigt wird, ist dieser erfindungsgemäss von einem temperierten Fluid umströmbar. Dadurch lässt sich eine besonders wirkungsvolle Temperierung der Oberfläche Sensors bzw. von dessen Fenster und/oder dessen Linse erreichen, so dass einerseits eine Niederschlagsbildung von Monomeren und Oligomeren durch Temperierung und Spülung der Oberfläche verhindert wird, während andererseits eine Niederschlagsbildung durch Feststoffpartikel zumindest durch die Spülwirkung des Fluids verhindert wird.

Mit der in Fig. 1 und Fig. 2 gezeigten Vorrichtung lässt sich somit folgendes Verfahren zum Herstellen eines dreidimensionalen Gegenstands durchführen:
➢ Aufbringen einer Schicht aus Pulver auf die Zieloberfläche 2;
➢ Zuführen von Energie an ausgewählten Stellen der Schicht, die einem Querschnitt des zu bildenden Gegenstands in der Schicht entsprechen, um das Pulver an den ausgewählten Stellen zu schmelzen;
➢ Wiederholen der Schritte des Aufbringens von Pulver und des Zuführens von Energie, um den Gegenstand schichtweise aufzubauen wobei die Temperatur der Zieloberfläche 2 und ggf. anderer Oberflächen im Innern der Prozesskammer durch Erfassen der von ihnen abgestrahlten Strahlung mittels eines Strahlungssensors 6 erfasst wird.

Erfindungsgemäss wird der Strahlungssensor 6 von einem temperierten Fluid umströmt.

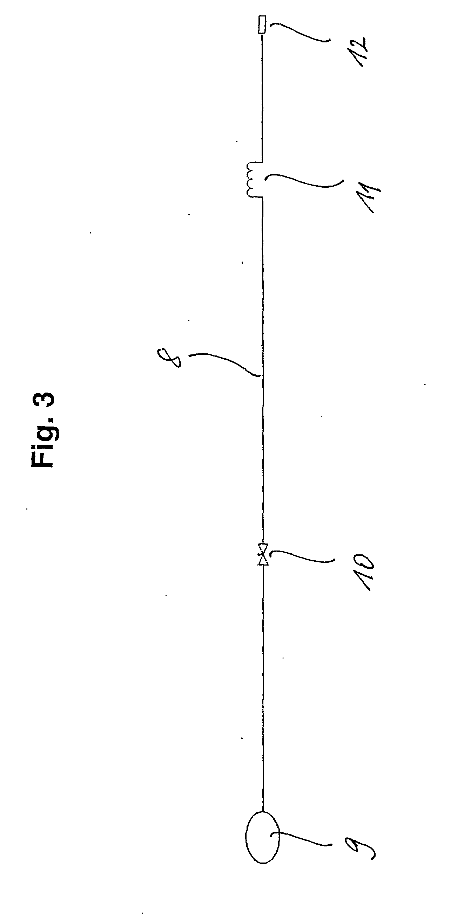

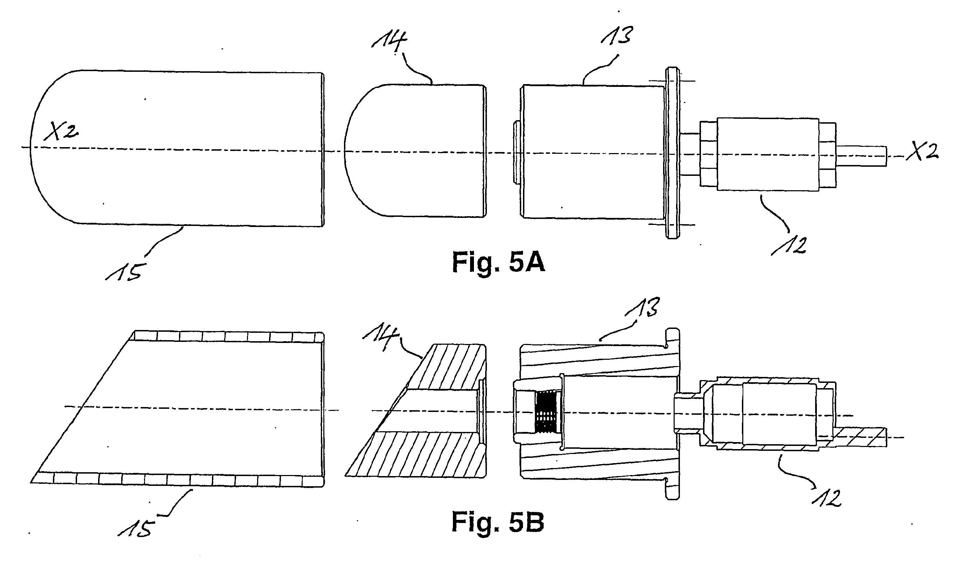

Fig. 3 ist eine schematische Darstellung der Schutzgas-Leitung 8, in der Stickstoff oder ein anderes Inertgas bzw. Schutzgas wie Kohlendioxid oder Argon von einer Schutzgas-Quelle 9 durch einen Durchflussmesser 10 und durch eine Heizvorrichtung 11 zu einem Schutzgas-Blasaufsatz 12 geleitet wird, der an den in Fig. 2 dargestellten Strahlungssensor bzw. IR-Sensor 6 angekoppelt ist (siehe auch Fig. 5A und 5B), so dass dieser von dem temperierten Schutzgas umströmt wird. Diese Belüftung des Sensors 6 mit vorgeheiztem Schutzgas verhindert die Bildung von Niederschlag auf dem Fenster 6a bzw. der Linse des Sensors 6.

Das aus dem Blasaufsatz 12 und an dem Fenster 6a bzw. der Linse des Sensors 6 vorbei in die Prozesskammer 1 austretende Schutzgas muss einerseits ausreichend stark strömen, um eine Niederschlagbildung am Sensor 6 zu verhindern, und darf andererseits nicht zu stark strömen, um zu verhindern, dass Pulver im Prozessraum 1 verwirbelt wird oder gar die Temperaturverteilung am Bauteil beeinflusst wird.

Ein typisches Volumen der Prozesskammer 1 liegt im Bereich von 0,2 m3 bis 3 m3. Dann beträgt die Durchflussmenge bzw. der Durchsatz des temperierten Schutzgases, welches den Sensor 6 umströmt, 20 cm3/min bis 400 cm3/min, vorzugsweise 50 cm3/min bis 200 cm3/min, bei einem Druck von 0,3x105 Pa bis 3x105 Pa, vorzugsweise von 0,6x105 Pa bis 1,2x105 Pa.

Bei der Temperierung des Sensors 6 durch Umströmen mit temperiertem Schutzgas muss man sich zwischen zwei kritischen Temperaturen bewegen. Die obere Temperatur To ist die maximal zulässige Sensor-Betriebstemperatur. Die untere Temperatur Tu ist die Sensor-Oberflächentemperatur, ab der eine nennenswerte Niederschlagbildung aus den Dämpfen (Monomere und Oligomere) und den Stäuben (Feststoffpartikel) aus der Prozesskammer 1 auf dem Sensor 6 stattfindet.

Für einen typischen Sensor 6 mit maximal 80°C wird die Kopftemperatur durch das ihn umströmende temperierte Schutzgas auf eine Höchsttemperatur eingestellt, die 10°C bis 20°C, vorzugsweise 14°C bis 16°C, tiefer als die maximal zulässige Kopftemperatur des Sensors 6 ist. Je nach Sensortyp können sich diese Werte ändern.

Der Sensor 6 besitzt am Rand seines Fensters 6a und/oder seiner Linse einen Aufsatz bzw. eine Abdeckung 14 (siehe Fig. 5A), die aus einem thermisch isolierenden Material besteht und somit eine thermische Isolierschicht bildet. Der Rand des Sensorfensters 6a und/oder der Sensorlinse selbst kann auch aus einem thermisch isolierenden Material bestehen. Dadurch wird gewährleistet, dass die Oberfläche der Isolierschicht 14 am Rand des Sensorfensters 6a oder der Sensorlinse im wesentlichen dieselbe Temperatur wie das Prozessraum-Volumen hat, in dem sich freigesetztes Material befindet. Auf diese Weise wird gewährleistet, dass auch in der unmittelbaren Umgebung des Sensorfensters 6a bzw. der Sensorlinse kein Niederschlag entsteht, der in das Sichtfeld des Sensors 6a vor dessen Fenster oder dessen Linse hineinwachsen könnte, bis das Fenster 6a oder die Linse zugewachsen wäre.

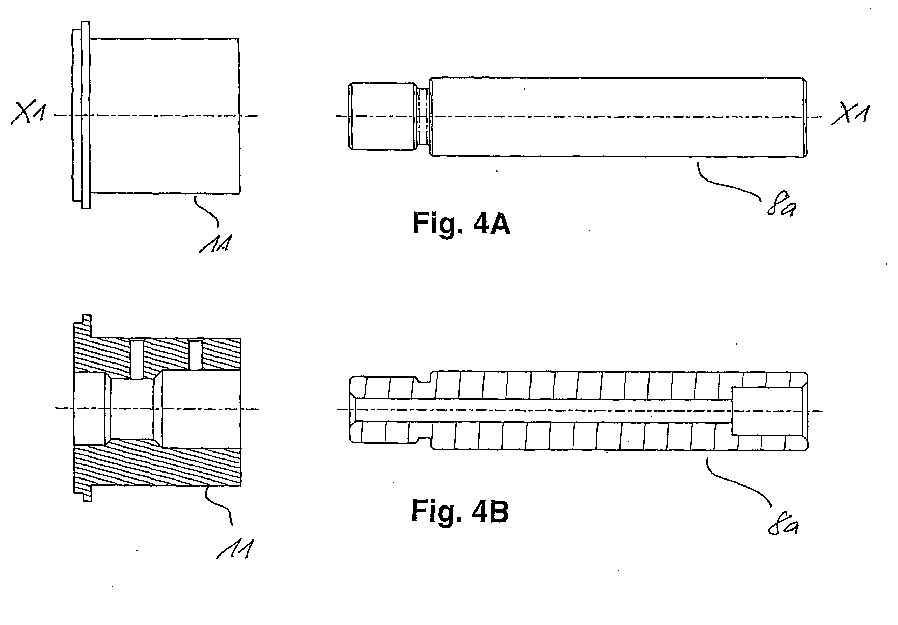

Fig. 4A zeigt eine Draufsicht auf eine auseinandergebaute Anordnung (HeizAnordnung) aus einem Heizelement 11 und einer Schutzgas-Durchführung 8a, die einen Teil der Schutzgas-Leitung 8 bildet. Die Schutzgas-Durchführung 8a ist an ihrer äusseren Oberfläche komplementär zur inneren Fläche des Heizelements 11 ausgebildet, so dass ein guter Wärmeübergang zwischen dem Heizelement 11 und der Schutzgas-Durchführung 8a gewährleistet wird. Das Heizelement 11 ist vorzugsweise ein elektrisches, z.B. resistives Heizelement oder ein Peltier-Heizelement. Die einander kontaktierenden Körper des Heizelements 11 und der Schutzgas-Durchführung 8a bestehen vorzugsweise aus stark wärmeleitenden Metallen wie Kupfer, Aluminium oder diese Metalle enthaltenden Legierungen.

Fig. 4B zeigt eine Schnittansicht durch die Anordnung von Fig. 4A entlang der Schnittebene X1-X2.

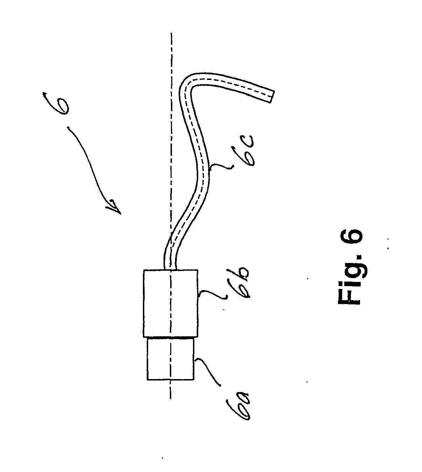

Fig. 5A zeigt eine Draufsicht auf eine teilweise auseinandergebaute Anordnung (Kühl/Spül-Anordnung) für einen Sensor 6 (siehe Fig. 6), einem Schutzgas-Blasaufsatz 12 zum Erzeugen eines den Sensor 6 umgebenden Schutzgas-Schleiers, einem den Sensorkörper 6b umgebenden Kühlelement 13, einem das Sensorfenster 6a umgebenden, auf den Sensor 6 schützendes Isolierelement 14, sowie einer Hülse 15, die über den Isolieraufsatz 14 und das Kühlelement 13 geschoben werden kann. Die einander kontaktierenden Körper des Kühlelements 13 und des Sensorkörpers 6b bestehen ebenfalls vorzugsweise aus stark wärmeleitenden Metallen wie Kupfer, Aluminium oder diese Metalle enthaltenden Legierungen. Das Schutzgas wird in der zusammengebauten Kühl/Spül-Anordnung durch das Zusammenwirken des Kühlelements 13 und des Isolieraufsatzes 14 annähernd parallel oder tangential zum Sensorfenster 6a oder der Sensorlinse vorbeibewegt. Dies gewährleistet eine sowohl effiziente Temperierung und Spülung der Sensoroberfläche.

Fig. 5B zeigt eine Schnittansicht durch die Anordnung von Fig. 3A entlang der Schnittebene X2-X2.

Fig. 6 zeigt eine Draufsicht eines IR-Sensors 6 mit Sensorlinse 6a und Körper 6b, welcher in den Luftblaseinsatz eingebaut wird. Das Sensorkabel 6c ist ein abgeschirmtes Kabel und verbindet die Sensorelektronik (z.B. im Sensor integriert) mit der Auswerteelektronik.

Durch die gesonderte Anbringung der das Heizelement 11 enthaltenden HeizAnordnung und der das Kühlelement 13 enthaltenden Kühl/Spül-Anordnung und durch die Bereitstellung des Isolieraufsatzes 14 in der Kühl/Spül-Anordnung wird das Vorheizen bzw. Temperieren des Schutzgases von dem Kühlen des Sensors 6 entkoppelt.

Selbstverständlich beschränkt sich die hier beispielhaft beschriebene gesonderte Kühlung, Temperierung und Spülung der jeweiligen Sensorteile (Sensorkörper 6b bzw. Sensorfenster 6a) nicht auf einen Sensor, sondern kann analog auch bei einem Laser oder einer Überwachungs-Kamera verwendet werden, wobei die gesonderte Kühlung. Temperierung und Spülung bei den jeweiligen Laserteilen (Laserkörper bzw. Laserfenster) bzw. Kamerateilen zur Anwendung kommt.

## Patentansprüche

1. Vorrichtung zur schichtweisen Herstellung eines dreidimensionalen Gegenstands durch ein generatives Verfahren, mit:
➢ einer Prozesskammer (1), in welcher der dreidimensionale Gegenstand nach und nach gebildet wird;
➢ einem Mittel zum, insbesondere selektiven, schichtweisen Auftragen von Material auf eine Zieloberfläche (2) in der Prozesskammer (1) und Miteinander-Verschmelzen der Materialschichten des zu bildenden dreidimensionalen Gegenstands; und
➢ mindestens einem elektromagnetischen Element (5) zum Aussenden elektromagnetischer Strahlung in die Prozesskammer (1) und/oder Empfangen elektromagnetischer Strahlung aus der Prozesskammer,
**dadurch gekennzeichnet, dass** die Vorrichtung ein Mittel zur Erzeugung eines Schleiers aus einem temperierten Fluid zwischen dem elektromagnetischen Element und dem Prozesskammer-Volumen aufweist.

2. Vorrichtung nach Anspruch 1, **dadurch gekennzeichnet, dass** das mindestens eine elektromagnetische Element ein optischer Sensor (6), insbesondere ein Infrarot-Sensor, ist.

3. Vorrichtung nach Anspruch 1 oder 2, **dadurch gekennzeichnet, dass** das mindestens eine elektromagnetische Element (5) ein Laser ist.

4. Vorrichtung nach einem der Ansprüche 1 bis 3, **dadurch gekennzeichnet, dass** ein Mittel (9) zur Erzeugung eines Fluid-Schleiers an dem elektromagnetischen Element (5) angeordnet ist.

5. Vorrichtung nach einem der Ansprüche 1 bis 3, **dadurch gekennzeichnet, dass** ein Mittel (9) zur Erzeugung eines Fluid-Schleiers beabstandet von dem elektromagnetischen Element (5) angeordnet ist.

6. Vorrichtung nach einem der Ansprüche 1 bis 5, **dadurch gekennzeichnet, dass** ein erstes Mittel zur Erzeugung eines ersten Fluid-Schleiers an dem elektromagnetischen Element (5) angeordnet ist und ein zweites Mittel zur Erzeugung eines zweiten Fluid-Schleiers beabstandet von dem elektromagnetischen Element (5) angeordnet ist.

7. Vorrichtung nach einem der Ansprüche 1 bis 6, **dadurch gekennzeichnet, dass** das elektromagnetische Element (5) ein Gehäuse sowie ein Fenster und/oder eine Linse in dem Gehäuse aufweist, das bzw. die in die Prozesskammer gerichtet ist.

8. Vorrichtung nach einem der Ansprüche 4 bis 7, **dadurch gekennzeichnet, dass** das Gehäuse des elektromagnetischen Elements einen Kanal (8) aufweist, der von dem temperierten Fluid durchströmbar ist.

9. Vorrichtung nach Anspruch 7 oder 8, **dadurch gekennzeichnet, dass** der Kanal eine Mündung (12) im Bereich des Fensters bzw. der Linse des elektromagnetischen Elements aufweist.

10. Vorrichtung nach Anspruch 9, **dadurch gekennzeichnet, dass** der Kanal im Mündungsbereich schräg zu dem Fenster bzw. der Linse ausgerichtet ist, damit das temperierte Fluid mit einer zur Fensterfläche bzw. Linsenoberfläche parallelen Strömungskomponente in die Prozesskammer austreten kann.

11. Vorrichtung nach einem der Ansprüche 8 bis 10, **dadurch gekennzeichnet, dass** der Kanal ein das gesamte elektromagnetische Element umgebender Kanal ist, der sich zwischen einem das elektromagnetische Element unmittelbar umgebenden inneren Gehäusebereich und einem den Kanal umgebenden äusseren Gehäusebereich erstreckt.

12. Vorrichtung nach Anspruch 11, **dadurch gekennzeichnet, dass** der Kanal senkrecht zur Strömungsrichtung einen kreisringförmigen oder von einem inneren und äusseren Polygon begrenzten Querschnitt aufweist.

13. Vorrichtung nach einem der Ansprüche 1 bis 12, **dadurch gekennzeichnet, dass** sie eine Fluidquelle aufweist, von der eine Fluidleitung zu dem elektromagnetischen Element führt.

14. Vorrichtung nach Anspruch 13, **dadurch gekennzeichnet, dass** sie eine Fluidsenke aufweist, über die das Fluid aus der Prozesskammer abgezogen wird.

15. Vorrichtung nach Anspruch 14, **dadurch gekennzeichnet, dass** die Fluidsenke mit der Fluidquelle (9) in Fluidverbindung steht, so dass ein Fluidkreislauf gebildet wird.

16. Vorrichtung nach Anspruch 15, **dadurch gekennzeichnet, dass** das Fluid zwischen der Fluidsenke und der Fluidquelle (9) aufbereitet wird.

17. Vorrichtung nach einem der Ansprüche 1 bis 16, **dadurch gekennzeichnet, dass** die Temperierung des elektromagnetischen Elements durch das umströmende Fluid, insbesondere nur durch das Fluid, erfolgt.

18. Vorrichtung nach einem der Ansprüche 7 bis 17, **dadurch gekennzeichnet, dass** das elektromagnetische Element (5) eine am Rand seines Fensters (6a) und/oder seiner Linse angebrachte thermische Isolierschicht (14) aufweist, oder dass der Rand seines Fensters und/oder seiner Linse aus einem thermisch isolierenden Material besteht.

19. Generatives Verfahren zur schichtweisen Herstellung eines dreidimensionalen Gegenstands, insbesondere unter Verwendung einer Vorrichtung gemäss einem der Ansprüche 1 bis 18, mit den Schritten:
➢ schichtweises, insbesondere selektives, Auftragen einer Schicht aus Material auf eine Zieloberfläche in einer Prozesskammer (1);
➢ Zuführen von Energie in die Schicht aus Material, um das Material innerhalb der Schicht und mit einer darunter liegenden Materialschicht des zu bildenden dreidimensionalen Gegenstands zu verschmelzen;
➢ Wiederholen der Schritte des Auftragens von Material und des Zuführens von Energie, um den Gegenstand schichtweise aufzubauen;
➢ wobei mittels mindestens eines elektromagnetischen Elements (5) elektromagnetische Strahlung in die Prozesskammer eingestrahlt wird und/oder die Temperatur der Zieloberfläche und ggf. anderer Oberflächen im Innern der Prozesskammer durch Erfassen der von ihnen abgestrahlten Strahlung bestimmt wird,
**dadurch gekennzeichnet, dass** ein Schleier aus einem temperierten Fluid zwischen dem elektromagnetischen Element und dem Prozesskammer-Volumen erzeugt wird.

20. Verfahren nach Anspruch 19, **dadurch gekennzeichnet, dass** ein Schleier aus temperiertem Fluid an dem elektromagnetischen Element (5) erzeugt wird.

21. Verfahren nach Anspruch 19, **dadurch gekennzeichnet, dass** ein Schleier aus Fluid beabstandet von dem elektromagnetischen Element (5) erzeugt wird.

22. Verfahren nach einem der Ansprüche 19 bis 21, **dadurch gekennzeichnet, dass** ein erster Fluid-Schleier an dem elektromagnetischen Element (5) erzeugt wird und ein zweiter Fluid-Schleier beabstandet von dem elektromagnetischen Element (5) erzeugt wird.

23. Verfahren nach einem der Ansprüche 19 bis 22, **dadurch gekennzeichnet, dass** das temperierte Fluid ein Schutzgas ist und insbesondere Stickstoff und/oder Argon aufweist.

24. Verfahren nach einem der Ansprüche 19 bis 23, **dadurch gekennzeichnet, dass** das temperierte Fluid das elektromagnetische Element (5) umströmt und einen Durchsatz bzw. eine Flüssigkeit aufweist.

25. Verfahren nach Anspruch 24, **dadurch gekennzeichnet, dass** die Flüssigkeit des temperierten Fluids nach dem Umströmen des elektromagnetischen Elements (5) erdampft wird und als Dampf in die Prozesskammer gelangt.

26. Verfahren nach Anspruch 24 oder 25, **dadurch gekennzeichnet, dass** das das elektromagnetische Element (5) umströmende temperierte Fluid ein Schutzgas ist, in dem Flüssigkeitströpfchen mitgeführt werden, die während des Umströmens des elektromagnetischen Elements zumindest teilweise verdampfen.

27. Verfahren nach einem der Ansprüche 19 bis 26, **dadurch gekennzeichnet, dass** das Volumen der Prozesskammer 0,2 m³ bis 3 m³ beträgt und die Durchflussmenge bzw. der Durchsatz des temperierten Fluids, welches das elektromagnetische Element umströmt, zwischen 20 cm³/min und 400 cm³/min, vorzugsweise zwischen 50 cm³/min und 200 cm³/min, bei einem Druck von 0,3x10⁵ Pa bis 3x10⁵ Pa, vorzugsweise von 0,6x10⁵ Pa bis 1,2x10⁵ Pa, liegt.

## Claims

1. A device for producing a three-dimensional object in a layered manner by means of a generative method, with:
➢ a process chamber (1) in which the three-dimensional object is formed step by step;
➢ a means for, in particular, selectively applying material in a layered manner onto a target surface (2) within the process chamber (1) and for melting together the material layers of the three-dimensional object to be formed; and
➢ at least one electromagnetic element (5) for emitting electromagnetic radiation into the process chamber (1) and/or for receiving electromagnetic radiation from the process chamber,
**characterized in that** the device comprises a means for generating a curtain from a tempered fluid between the electromagnetic element and the process chamber volume.

2. The device according to claim 1, **characterized in that** the at least one electromagnetic element is an optical sensor (6), in particular an infrared sensor.

3. The device according to claim 1 or claim 2, **characterized in that** the at least one electromagnetic element (5) is a laser.

4. The device according to any one of the claims 1 to 3, **characterized in that** a means (9) for generating a fluid curtain is arranged on the electromagnetic element (5).

5. The device according to any one of the claims 1 to 3, **characterized in that** a means (9) for generating a fluid curtain is arranged spaced apart from the electromagnetic element (5).

6. The device according to any one of the claims 1 to 5, **characterized in that** a first means for generating a first fluid curtain is arranged on the electromagnetic element (5), and a second means for generating a second fluid curtain is arranged spaced apart from the electromagnetic element (5).

7. The device according to any one of the claims 1 to 6, **characterized in that** the electromagnetic element (5) comprises a housing and, within the housing, a window and/or a lens directed into the process chamber.

8. The device according to any one of the claims 4 to 7, **characterized in that** the housing of the electromagnetic element comprises a channel (8) through which the tempered fluid can flow.

9. The device according to claim 7 or claim 8, **characterized in that** the channel comprises a port (12) in the region of the window or the lens of the electromagnetic element.

10. The device according to claim 9, **characterized in that** the channel is aligned inclined to the window or the lens so that the tempered fluid can discharge into the process chamber with a flow component parallel to the window surface or lens surface.

11. The device according to any one of the claims 8 to 10, **characterized in that** the channel is a channel which surrounds the entire electromagnetic element and which extends between an inner housing region directly surrounding the electromagnetic element and an outer housing region surrounding the channel.

12. The device according to claim 11, **characterized in that** the channel comprises a cross section which is perpendicular to the flow direction and which is circular, or is bordered by an inner and an outer polygon.

13. The device according to any one of the claims 1 to 12, **characterized in that** it comprises a fluid source from which a fluid line runs to the electromagnetic element.

14. The device according to claim 13, **characterized in that** it comprises a fluid sink through which the fluid is discharged from the process chamber.

15. The device according to claim 14, **characterized in that** the fluid sink is in fluid communication with the fluid source (9) in such a manner that a fluid circuit is formed.

16. The device according to claim 15, **characterized in that** the fluid is treated between the fluid sink and the fluid source (9).

17. The device according to any one of the claims 1 to 16, **characterized in that** the tempering of the electromagnetic element takes place by means of the cross-flowing fluid, in particular by means of the fluid only.

18. The device according to any one of the claims 7 to 17, **characterized in that** the electromagnetic element (5) comprises a thermal insulation layer (14) attached on the edge of its window (6a) and/or its lens, or that the edge of its window and/or its lens consists of a thermally insulating material.

19. A generative method for producing a three-dimensional object in a layered manner, in particular by using a device according to any one of the claims 1 to 18, comprising the steps of:
➢ applying a layer of material in a layered manner, in particular in a selective manner, onto a target surface within a process chamber (1);
➢ supplying energy into the layer of material to melt the material within the layer and to melt it into an underlying material layer of the three-dimensional object to be formed;
➢ repeating the steps of applying material and of supplying energy to construct the object in a layered manner;
➢ wherein by means of at least one electromagnetic element (5), electromagnetic radiation is emitted into the process chamber, and/or the temperature of the target surface and, if necessary, of other surfaces inside the process chamber is determined by detecting the radiation emitted therefrom,
**characterized in that** a curtain from tempered fluid is generated between the electromagnetic element and the process chamber volume.

20. The method according to claim 19, **characterized in that** a curtain from tempered fluid is generated on the electromagnetic element (5).

21. The method according to claim 19, **characterized in that** a curtain from fluid is generated spaced apart from the electromagnetic element (5).

22. The method according to any one of the claims 19 to 21, **characterized in that** a first fluid curtain is generated on the electromagnetic element (5) and that a second fluid curtain is generated spaced apart from the electromagnetic element (5).

23. The method according to any one of the claims 19 to 22, **characterized in that** the tempered fluid is an inert gas and comprises in particular nitrogen and/or argon.

24. The method according to anyone of the claims 19 to 23, **characterized in that** the tempered fluid flows around the electromagnetic element (5) and has a flow rate or a liquid.

25. The method according to claim 24, **characterized in that** the liquid of the tempered fluid is evaporated after flowing around the electromagnetic element (5) and reaches the process chamber in the form of vapor.

26. The method according to claim 24 or claim 25, **characterized in that** the tempered fluid flowing around the electromagnetic element (5) is an inert gas carrying liquid droplets which evaporate at least partially while flowing around the electromagnetic element.

27. The method according to any one of the claims 19 to 26, **characterized in that** the volume of the process chamber is 0.2 m³ to 3 m³ and the throughput or the flow rate of the tempered fluid flowing around the electromagnetic element is between 20 cm³/min and 400 cm³/min, preferably between 50 cm³/min and 200cm³/min, at a pressure from 0.3 x 10⁵ Pa to 3 x 10⁵ Pa, preferably from 0.6 x 10⁵ Pa to 1.2 x 10⁵ Pa.

## Revendications

1. Dispositif pour la fabrication couche par couche d'un objet tridimensionnel, par un procédé génératif, avec :
- une chambre de processus (1) dans laquelle est progressivement formé l'objet tridimensionnel ;
- un moyen pour l'application couche par couche, en particulier sélective, d'un matériau sur une surface cible (2) dans une chambre de processus (1), et fusion des couches de matériau de l'objet tridimensionnel à former ; et
- au moins un élément électromagnétique (5) pour l'émission d'un rayonnement électromagnétique dans la chambre de processus (1) et/ou la réception d'un rayonnement électromagnétique venant de la chambre de processus,
**caractérisé en ce que** le dispositif comporte un moyen pour la fabrication d'un voile à partir d'un fluide tempéré, entre l'élément électromagnétique et le volume de la chambre de processus.

2. Dispositif selon la revendication 1, **caractérisé en ce que** l'au moins un élément électromagnétique est un capteur optique (6), en particulier un capteur infrarouge.

3. Dispositif selon l'une des revendications 1 ou 2, **caractérisé en ce que** l'au moins un élément électromagnétique est un laser.

4. Dispositif selon l'une des revendications 1 à 3, **caractérisé en ce qu'**un moyen (9) pour la fabrication d'un voile de fluide est disposé sur l'élément électromagnétique (5).

5. Dispositif selon l'une des revendications 1 à 3, **caractérisé en ce qu'**un moyen (9) pour la fabrication d'un voile de fluide est disposé à distance de l'élément électromagnétique (5).

6. Dispositif selon l'une des revendications 1 à 5, **caractérisé en ce qu'**un premier moyen pour la fabrication d'un premier voile de fluide est disposé sur l'élément électromagnétique (5), et un deuxième moyen pour la fabrication d'un deuxième voile de fluide est disposé à distance de l'élément électromagnétique (5).

7. Dispositif selon l'une des revendications 1 à 6, **caractérisé en ce que** l'élément électromagnétique (5) comporte un boîtier ainsi qu'une fenêtre et/ou une lentille dans le boîtier, qui est dirigée dans la chambre de processus.

8. Dispositif selon l'une des revendications 4 à 7, **caractérisé en ce que** le boîtier de l'élément électromagnétique comporte un canal (8) à travers lequel peut s'écouler le fluide tempéré.

9. Dispositif selon l'une des revendications 7 ou 8, **caractérisé en ce que** le canal comporte un embranchement (12) dans la région de la fenêtre ou de la lentille de l'élément électromagnétique.

10. Dispositif selon la revendication 9, **caractérisé en ce que** dans la région d'embranchement, le canal est orienté en biais par rapport à la fenêtre ou de la lentille, pour que le fluide tempéré puisse s'écouler dans la chambre de processus avec une composante de flux parallèle à la surface de fenêtre ou à la surface de lentille.

11. Dispositif selon l'une des revendications 8 à 10, **caractérisé en ce que** le canal est un canal entourant l'ensemble de l'élément électromagnétique, s'étendant entre une région de boîtier interne entourant directement l'élément électromagnétique et une région de boîtier externe entourant le canal.

12. Dispositif selon la revendication 11, **caractérisé en ce que,** perpendiculairement au sens d'écoulement, le canal comporte une section transversale circulaire ou délimitée par un polygone interne et externe.

13. Dispositif selon l'une des revendications 1 à 12, **caractérisé en ce qu'**il comporte une source de fluide, à partir de laquelle une conduite à fluide mène vers l'élément électromagnétique.

14. Dispositif selon la revendication 13, **caractérisé en ce qu'**il comporte un creux à fluide, par lequel le fluide est retiré de la chambre de processus.

15. Dispositif selon la revendication 14, **caractérisé en ce que** le creux à fluide est relié à la source de fluide (9), de manière à former un circuit de fluide.

16. Dispositif selon la revendication 15, **caractérisé en ce que** le fluide est préparé entre le creux à fluide et la source de fluide (9).

17. Dispositif selon l'une des revendications 1 à 16, **caractérisé en ce que** la mise à température de l'élément électromagnétique est effectuée par le fluide en circulation, en particulier uniquement par le fluide.

18. Dispositif selon l'une des revendications 7 à 17, **caractérisé en ce que** l'élément électromagnétique (5) comporte une couche thermo-isolante (14) appliquée sur le bord de sa fenêtre (6a) et/ou de sa lentille, ou **en ce que** le bord de sa fenêtre et/ou de sa lentille est constitué d'un matériau thermo-isolant.

19. Procédé génératif pour la fabrication couche par couche d'un objet tridimensionnel, en particulier à l'aide d'un dispositif selon l'une des revendications 1 à 18, avec les étapes suivantes :
- application couche par couche, en particulier sélective, d'une couche de matériau sur une surface cible dans une chambre de processus (1) ;
- alimentation en énergie dans la couche de matériau, afin de fusionner le matériau dans la couche et avec une couche de matériau inférieure de l'objet tridimensionnel à former ;
- répétition des étapes d'application de matériau et d'alimentation en énergie, pour construire l'objet tridimensionnel couche par couche ;
- dans lequel, au moyen d'au moins un élément électromagnétique (5), un rayonnement électromagnétique est émis vers la chambre de processus, et/ou la température de la surface cible ou encore d'autres surfaces à l'intérieur de la chambre de processus est déterminée par la détection du rayonnement émis par ceux-ci,
**caractérisé en ce qu'**un voile est produit à partir d'un fluide tempéré, entre l'élément électromagnétique et le volume de la chambre de processus.

20. Procédé selon la revendication 19, **caractérisé en ce qu'**un voile est produit sur l'élément électromagnétique (5) à partir d'un fluide tempéré.

21. Procédé selon la revendication 19, **caractérisé en ce qu'**un voile de fluide est produit à distance de l'élément électromagnétique (5).

22. Procédé selon l'une des revendications 19 à 21, **caractérisé en ce qu'**un premier voile de fluide est produit sur l'élément électromagnétique (5) et un deuxième voile de fluide est produit à distance de l'élément électromagnétique (5).

23. Procédé selon l'une des revendications 19 à 22, **caractérisé en ce que** le fluide tempéré est un gaz protecteur et comporte en particulier de l'azote et/ou de l'argon.

24. Procédé selon l'une des revendications 19 à 23, **caractérisé en ce que** le fluide tempéré circule autour de l'élément électromagnétique (5) et comporte un débit ou un liquide.

25. Procédé selon la revendication 24, **caractérisé en ce que** le liquide du fluide tempéré est évaporé après avoir circulé autour de l'élément électromagnétique (5), et parvient dans la chambre de processus sous forme de vapeur.

26. Procédé selon l'une des revendications 24 ou 25, **caractérisé en ce que** le fluide tempéré circulant autour de l'élément électromagnétique (5) est un gaz protecteur, dans lequel sont entraînées des gouttelettes de liquide qui s'évaporent au moins partiellement durant la circulation autour l'élément électromagnétique.

27. Procédé selon l'une des revendications 19 à 26, **caractérisé en ce que** le volume de la chambre de processus est compris entre 0,2 m³ et 3 m³, et le volume de flux ou le débit du fluide tempéré circulant autour de l'élément électromagnétique est compris entre 20 cm³/min et 400 cm³/min, de préférence entre 50 cm³/min et 200 cm³/min, pour une pression comprise entre 0,3x10⁵ Pa et 3x10⁵ Pa, de préférence entre 0,6x10^{s} Pa et 1,2x10⁵ Pa.
